# EUROPEAN PATENT SPECIFICATION

(11) **EP 3 620 491 B1**
(45) Date of publication and mention of the grant of the patent: **21.07.2021**
(21) Application number: 18193018.1
(22) Date of filing: 06.09.2018
(51) Int. Cl.: C08L 71/00, C08K 3/00, C08K 7/14, C08L 79/08, C08L 81/04

(54) **COMPATIBILIZED COMPOSITION, ARTICLE COMPRISING A COMPATIBILIZED COMPOSITION, AND METHOD OF MAKING A COMPATIBILIZED COMPOSITION**
KOMPATIBILISIERTE ZUSAMMENSETZUNG, ARTIKEL MIT EINER KOMPATIBILISIERTEN ZUSAMMENSETZUNG UND VERFAHREN ZUR HERSTELLUNG EINER KOMPATIBILISIERTEN ZUSAMMENSETZUNG
COMPOSITION COMPATIBILISÉE, ARTICLE COMPRENANT UNE COMPOSITION COMPATIBILISÉE ET PROCÉDÉ DE FABRICATION D'UNE COMPOSITION COMPATIBILISÉE

(43) Date of publication of application: 11.03.2020
(73) Proprietor: SHPP Global Technologies B.V., 4612 PX Bergen op Zoom (NL)
(72) Inventor: Ramalingam, Hariharan, Karnataka (IN); Chatterjee, Gautam, 560025 Karnataka (IN); Sreeramagiri, Sivakumar, Karnataka (IN); MK, Pooja, Epsom, Surrey KT19 0HE (GB); Arumugam, Sathappan, Minnetonka, Minnesota 55305 (US); Sheth, Kapil Chandrakant, Mt Vernon, Indiana 47620 (US); Mishra, Sanjay Braj, Mt Vernon, Indiana 47620 (US)
(74) Representative: Balder IP Law, S.L.

(56) References cited:
- WO-A2-2008/116939
- US-A1- 2013 079 459
- US-A1- 2014 194 579

## Description

### BACKGROUND

There has long been interest in developing thermoplastic blends containing semi-crystalline and amorphous materials that exhibit chemical resistance and good mechanical property retention at high temperature. Many semi-crystalline polymer blends demonstrate excellent chemical resistance. However, the addition of amorphous materials to obtain high temperature property retention is not as well documented, as such polymer blends generally tend to be incompatible and difficult to compound without the addition of fillers or additives such as glass, talc, or mica. When a compatible unfilled resin blend is desired, it is often necessary to add a small amount of another ingredient or compatibilizer to promote more thorough blending between the two polymers. The additional ingredient(s) can promote bond formation between the different materials. It can be difficult to identify suitable compatibilizers, as effective compatibilizers in one polymer blend may not be effective in others; a great deal depends upon the chemistry and specific functionalities of the molecules being blended and their interaction.

Poly(amides) are high performance thermoplastic polymers and have enjoyed tremendous commercial success as a result of their generally excellent processability and solvent resistance. However their utility in some applications, such as in molding compositions, has been hindered largely as a result of their tendency to absorb water, thus gain weight and swell or expand. Poly(etherimide sulfones) are another class of high performance specialty thermoplastics. Owing to their high use-temperatures, excellent mechanical properties, inherent flame resistance and low smoke evolution, good electrical properties and generally good physical properties, poly(etherimide sulfones) are becoming increasingly desirable for a wide range of engineering applications. However poly(imides), are generally processed at high temperatures which can adversely affect the properties of the polymer and lead to material degradation.

Different thermoplastic polymer mixtures comprising poly(etherimide sulfones) have been described in the prior art. In particular, WO2008/116939 A2 describes a thermoplastic polymer mixture comprising at least one poly(aryl ether ketone) (P1), at least one poly(arylene sulfide) (P2), and between 0 and 25 wt. % of the total weight of the thermoplastic mixture (M), of a thermoplastic polymer material (P3) consisting of (i) at least one poly(biphenyl ether sulfone) (P3a), and/or (ii) at least one poly(ether imide) (P3b), and/or at least one poly(ether imide sulfone) (P3c), wherein: the combined weight amount of the poly(aryl ether ketone) (PI) and the poly(arylene sulfide) (P2), based on the total weight of the polymer mixture (M), is of at least 30 %, and the weight amount of the poly(aryl ether ketone) (P1), based on the combined weight of the poly(aryl ether ketone) (PI) and the poly(arylene sulfide) (P2), is of at most 90%. US2014/194579 A1 describes a composition comprising a blend of: a) a polyethersulfone; b) a polyphenylene sulfide (PPS); and, c) an epoxy, and optionally a polyetherimide, wherein the polyetherimide and epoxy are present in an amount effective to act as a compatibilizer for the polyethersulfone and polyphenylene sulfide (PPS). Additionally, US2013/079459 A1 describes a composition comprising a compatible blend of i) 15 to 45 wt.% of a linear poly (arylene sulfide), ii) 50 to 85 wt.% of a polyetherimide sulfone and (iii) 1 to 3 wt.% of a novolac resin having an average of 2 or more epoxy groups per molecule, wherein weight percent is based on the total weight of the composition.

It would be desirable to provide a compatibilized composition comprising a poly(phthalamide) and a poly(etherimide sulfone). It would be particularly advantageous for such a composition to exhibit good mechanical properties.

### BRIEF DESCRIPTION

A compatibilized composition comprises 10 to 90 weight percent of a poly(etherimide sulfone); 10 to 90 weight percent of a poly(phthalamide); and at least one of a poly(etherimide) and an epoxy novolac resin, wherein the poly(etherimide) and the epoxy are present in an amount effective to act as a compatibilizer for the poly(etherimide sulfone) and the poly(phthalamide); wherein weight percent of each component is based on the total weight of the composition.

An article comprises the compatibilized composition, preferably wherein the article in a molded article.

A method of making the compatibilized composition comprises: a) melt-mixing the poly(etherimide sulfone) and, when present, the poly(etherimide); b) melt-mixing the poly(phthalamide) and, when present, the epoxy novolac resin; wherein step a) and step b) are carried out sequentially or simultaneously; preferably wherein steps a) and b) are at a temperature of 300 to 360°C, more preferably wherein step a) is at a temperature of 350 to 360°C and step b) is at a temperature of 330 to 340°C.

The above described and other features are exemplified by the following detailed description.

### DETAILED DESCRIPTION

The present inventors have advantageously discovered that compatibilized compositions comprising a poly(etherimide sulfone) and a poly(phthalamide) can be prepared when at least one of a poly(etherimide) and an epoxy novolac resin are included in the composition in an amount effective to act as a compatibilizer for the poly(etherimide sulfone) and the poly(phthalamide).

Accordingly, an aspect of the present disclosure is a compatibilized composition comprising a poly(etherimide sulfone), a poly(phthalamide), and at least one of a poly(etherimide) and an epoxy novolac resin, wherein the poly(etherimide) and the epoxy are present in an amount effective to act as a compatibilizer for the poly(etherimide sulfone) and the poly(phthalamide).

The poly(etherimide sulfone) of the present disclosure comprises more than 1, for example 2 to 1000, or 5 to 500, or 10 to 100, structural units of formula (1) 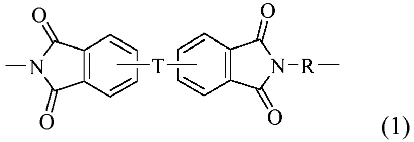 wherein each R is independently the same or different, and is a substituted or unsubstituted divalent organic group, such as a substituted or unsubstituted C₆₋₂₀ aromatic hydrocarbon group, a substituted or unsubstituted straight or branched chain C₄₋₂₀ alkylene group, a substituted or unsubstituted C₃₋₈ cycloalkylene group, in particular a halogenated derivative of any of the foregoing provided that at least some groups R contain a sulfone group (-SO₂-). In some embodiments R is divalent group of one or more of the following formulas (2) 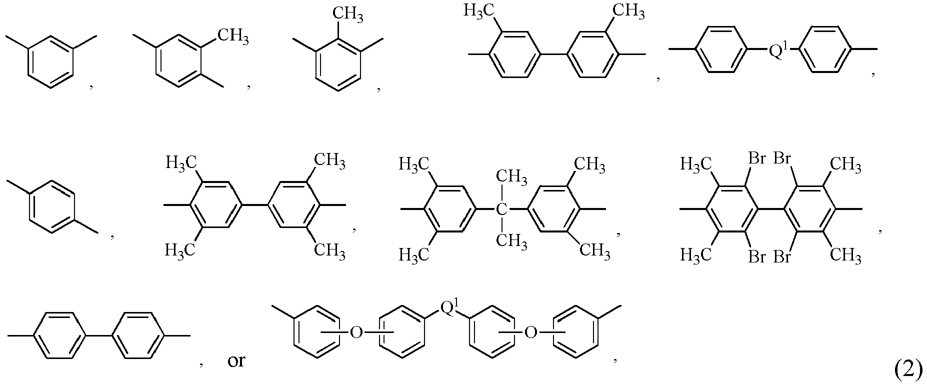 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4, provided that at least 10 mol% of the R groups comprise a sulfone group. In an embodiment at least 10 mole% of the R groups are diphenylene sulfone groups, with the remainder of the R groups being is m-phenylene or p-phenylene. In another embodiment, at least 50 mole%, or at least 60 mole%, or at least 75 mole%, or at least 80 mole%, or at least 90 mole% of the R groups are diphenylene sulfone groups. In some embodiments, all of the R groups are diphenylene sulfone groups.

Further in formula (1), T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (3) 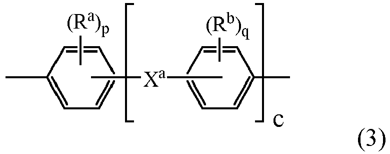 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3a) 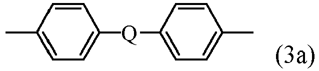 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (1), R is bis(4,4'-phenylene)sulfone, bis(3,4'-phenylene)sulfone, bis(3,3'-phenylene)sulfone, or a combination comprising at least one of the foregoing, and T is -O-Z-O- wherein Z is a divalent group of formula (3a). Alternatively, R is bis(4,4'-phenylene)sulfone, bis(3,4'-phenylene)sulfone, bis(3,3'-phenylene)sulfone, or a combination comprising at least one of the foregoing, and T is -O-Z-O wherein Z is a divalent group of formula (3a) and Q is 2,2-isopropylidene.

In some embodiments, the poly(etherimide sulfone) can be a copolymer that optionally comprises additional structural imide units that are not polyetherimide units, for example imide units of formula (4) 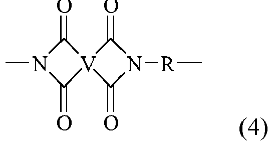 wherein R is as described in formula (1) and each V is the same or different, and is a substituted or unsubstituted C₆₋₂₀ aromatic hydrocarbon group, for example a tetravalent linker of the formulas 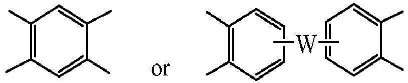 wherein W is a single bond, -O-, -S-, -C(O)-, -SO₂-, -SO-, a C₁₋₁₈ hydrocarbylene group, - P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the poly(etherimide sulfone).

The poly(etherimide sulfone) can be prepared by any of the methods well to those skilled in the art, including the reaction of an aromatic bis(ether anhydride) of formula (5) or a chemical equivalent thereof, with an organic diamine of formula (6)

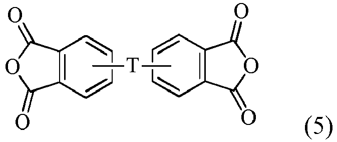

H₂N-R-NH₂ (6)

wherein T and R are defined as described above. Copolymers of the poly(etherimide sulfone)s can be manufactured using a combination of an aromatic bis(ether anhydride) of formula (5) and an additional bis(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In some embodiments the organic diamine is 4,4'-diaminodiphenyl sulfone, 3,4'-diaminodiphenyl sulfone, 3,3'-diaminodiphenyl sulfone, or a combination comprising at least one of the foregoing.

The poly(etherimide sulfone) can have a melt index of 0.1 to 10 grams per minute (g/min), as measured by American Society for Testing Materials (ASTM) D1238 at 340 to 370 °C, using a 6.7 kilogram (kg) weight. In some embodiments, the poly(etherimide sulfone) has a weight average molecular weight (Mw) of 1,000 to 150,000 grams/mole (Daltons), as measured by gel permeation chromatography, using polystyrene standards. In some embodiments the poly(etherimide sulfone) has an Mw of 10,000 to 80,000 Daltons. Such poly(etherimide sulfone)s can have an intrinsic viscosity greater than 0.2 deciliters per gram (dl/g), or, more specifically, 0.35 to 0.7 dl/g as measured in m-cresol at 25 °C.

The poly(etherimide sulfone) can be present in an amount of 10 to 90 weight percent (wt.%), based on the total weight of the composition. Within this range, the poly(etherimide sulfone) can be present in an amount of 20 to 80 wt.%, or 20 to 70 wt.%, or 30 to 60 wt.%, or 40 to 60 wt.%, or 45 to 55 wt.%, or 10 to 50 wt.%, or 10 to 40 wt.%, or 10 to 30 wt.%.

In addition to the poly(etherimide sulfone), the compatibilized composition comprises a poly(phthalamide). Poly(phthalamide)s comprise repeating units having the formula (7) 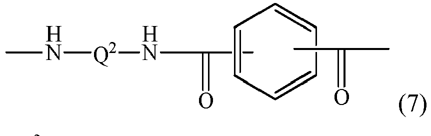 wherein Q² is independently at each occurrence a branched or unbranched alicyclic C₄₋₈ alkylene. In some embodiments, Q² is independently at each occurrence a 1,6-hexylene, a 2-methylpentylene, or a combination comprising at least one of the foregoing. Poly(phthalamide)s are the condensation product of terephthalic acid and a diamine, isophthalic acid and a diamine, or a combination of terephthalic acid, isophthalic acid, and a diamine. When employing more than one diamine or more than one diacid, the ratio of the types of diamines or types of dicarboxylic acids can affect one or more physical properties of the resulting polymer, such as the melt temperature. The ratio of diamine to dicarboxylic acid is typically equimolar, although excesses of one or the other can be used to determine the end group functionality. In addition the reaction can further include monoamines and monocarboxylic acids that function as chain stoppers and determine, at least in part, the end group functionality. In some embodiments it is preferable to have an amine end group content of greater than or equal to about 30 milliequivalents per gram (meq/g), or, more specifically, greater than or equal to about 40meq/g.

In some embodiments the polyphthalamide is a block copolymer or a random copolymer further comprising units of the formula (8) 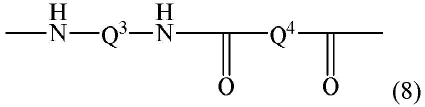 wherein Q³ and Q⁴ are independently at each occurrence a branched or unbranched alicyclic C₄₋₁₂ alkylene. Q³ and Q⁴ can be the same or different alicyclic C₄₋₁₂ alkylene group.

The poly(phthalamide) can have has a glass transition temperature (Tg) greater than or equal to 80°C, or, greater than or equal to 100°C, or, greater than or equal to 120°C. The polyphthalamide can also have a melting temperature (Tm) of 290 to 330°C. Within this range the Tm can be greater than or equal to 300°C. Also within this range the Tm can be less than or equal to 325°C.

The poly(phthalamide) can be present in an amount of 10 to 90 weight percent, based on the total weight of the composition. Within this range, the amount of the poly(phthalamide) can be 20 to 80 wt.%, or 40 to 80 wt.%, or 55 to 75 wt.%, or 60 to 80 wt.%, or 20 to 50 wt.%, or 20 to 40 wt.%, or 25 to 35 wt.%.

In addition to the poly(etherimide sulfone) and the poly(phthalamide), the composition further comprises at least one of a poly(etherimide) and an epoxy novolac resin, wherein the poly(etherimide) and the epoxy are present in an amount effective to act as a compatibilizer for the poly(etherimide sulfone) and the poly(phthalamide). In some embodiments, the compatibilizer comprises the epoxy novolac resin. In some embodiments, the compatibilizer comprises the poly(etherimide). In some embodiments, the compatibilizer comprises both the poly(etherimide) and the epoxy novolac resin.

The poly(etherimide) is different from the poly(etherimide sulfone). Thus, the poly(etherimide) can comprise repeating units as described above for the poly(etherimide sulfone) according to formula (1), except that none of the R groups contain sulfone linkages. Stated another way, the poly(etherimide) comprises repeating units derived from a dianhydride and a diamine other than a diamino diarylsulfone. For example, in some embodiments, the poly(etherimide) is of formula (1), wherein m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O- wherein Z is a divalent group of formula (3a) and Q is 2,2-isopropylidene.

The poly(etherimide) can also be a copolymer comprising polyetherimide units of formula (1) and siloxane blocks of formula (9) 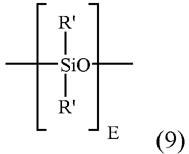 wherein E has an average value of 2 to 100, 2 to 31, 5 to 75, 5 to 60, 5 to 15, or 15 to 40, each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no bromine or chlorine is present, and in another embodiment no halogens are present. Combinations of the foregoing R groups can be used in the same copolymer. In an embodiment, the polysiloxane blocks comprises R' groups that have minimal hydrocarbon content. In a specific embodiment, an R' group with a minimal hydrocarbon content is a methyl group.

The poly (siloxane-etherimide)s can be formed by polymerization of an aromatic bis(ether anhydride) of formula (5) and a diamine component comprising an organic diamine (6) as described above or a combination of diamines, and a polysiloxane diamine of formula (10) 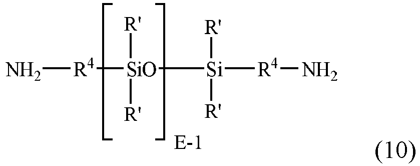 wherein R' and E are as described in formula (9), and R⁴ is each independently a C₂-C₂₀ hydrocarbon, in particular a C₂-C₂₀ arylene, alkylene, or arylenealkylene group. In an embodiment R⁴ is a C₂-C₂₀ alkylene group, specifically a C₂-C₁₀ alkylene group such as propylene, and E has an average value of 5 to 100, 5 to 75, 5 to 60, 5 to 15, or 15 to 40. Procedures for making the polysiloxane diamines of formula (10) are well known in the art.

In some poly(siloxane-etherimide)s the diamine component can contain 10 to 90 mole percent (mol %), or 20 to 50 mol%, or 25 to 40 mol% of polysiloxane diamine (8) and 10 to 90 mol%, or 50 to 80 mol%, or 60 to 75 mol% of diamine (6), for example as described in US Patent 4,404,350. The diamine components can be physically mixed prior to reaction with the bisanhydride(s), thus forming a substantially random copolymer. Alternatively, block or alternating copolymers can be formed by selective reaction of (6) and (8) with aromatic bis(ether anhydrides (5), to make polyimide blocks that are subsequently reacted together. Thus, the poly(siloxane-imide) copolymer can be a block, random, or graft copolymer. In an embodiment the copolymer is a block copolymer.

Examples of specific poly(siloxane-etherimide)s are described in US Pat. Nos. 4,404,350, 4,808,686 and 4,690,997. In an embodiment, the poly(siloxane-etherimide) has units of formula (11) 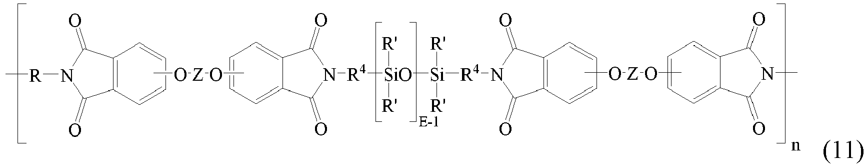 wherein R' and E of the siloxane are as in formula (7), R and Z of the imide are as in formula (1), R⁴ is as in formula (10), and n is an integer from 5 to 100. In a specific embodiment of the poly(siloxane-etherimide), R of the etherimide is a phenylene, Z is a residue of bisphenol A, R⁴ is n-propylene, E is 2 to 50, 5, to 30, or 10 to 40, n is 5 to 100, and each R' of the siloxane is methyl.

The relative amount of poly siloxane units and etherimide units in the poly(siloxane-etherimide) depends on the desired properties, and are selected using the guidelines provided herein. In particular, as mentioned above, the block or graft poly(siloxane-etherimide) copolymer is selected to have a certain average value of E, and is selected and used in amount effective to provide the desired wt% of polysiloxane units in the composition. In an embodiment the poly(siloxane-etherimide) comprises 10 to 50 wt%, 10 to 40 wt%, or 20 to 35 wt% polysiloxane units, based on the total weight of the poly(siloxane-etherimide).

The poly(etherimide), when present, can be included in the composition in an amount of less than or equal to 35 weight percent, based on the total weight of the composition. For example, the poly(etherimide) can be present in an amount of greater than 0 to less than 35 wt.%, or 1 to 30 wt.%, or 5 to 25 wt.%, or 5 to 20 wt.%, or 5 to 15 wt.%, or 10 to 25 wt.%, or 15 to 25 wt.%, or 10 to 20 wt.%.

In some embodiments, the epoxy novolac resin can have an average epoxy equivalent of at least 2 units per molecule, or an average of greater than or equal to 6 pendant epoxy groups per molecule, or, more specifically, an average of greater than or equal to 20 pendant epoxy groups per molecule or, more specifically, an average of greater than or equal to 50 pendant epoxy groups per molecule. In a specific embodiment, the epoxy novolac resin can have 2 to 8 pendant epoxy groups per molecule, or 3 to 7 pendant epoxy groups per molecule, or 4 to 6 pendant epoxy groups per molecule.

Without being bound by theory it is believed that the epoxy novolac resin can interact with the poly(phthalamide), the poly(etherimide sulfone), or both. This interaction can be chemical (e.g. grafting) or physical (e.g. affecting the surface characteristics of the disperse phases). When the interaction is chemical, the epoxy groups of the epoxy novolac resin can be partially or completely reacted with the poly(phthalamide), the poly(etherimide sulfone), or both such that the composition can comprise a reaction product.

The epoxy novolac resin can be made by reacting a phenol with formaldehyde. The term "phenol" as used herein includes substituted and unsubstituted phenyl, aryl, and fused aromatic rings having a hydroxyl group. The molar ratio of formaldehyde to phenol is less than 1. The novolac resin can be functionalized with epoxy groups by reacting the novolac resin with epichlorohydrin in the presence of sodium hydroxide as a catalyst. The epoxy novolac resin can have an average molecular weight of 500 to 2500 Daltons. Within this range the epoxy novolac resin can have a molecular weight greater than or equal to 550 Daltons. Also within this range the epoxy novolac resin can have a molecular weight less than or equal to 900 Daltons.

In a specific embodiment, the epoxy novolac resin can be an epoxy phenol novolac (EPN) resin, an epoxy cresol novolac (ECN) resin, or a combination comprising at least one of the foregoing. For example, the epoxy novolac resin can comprise units of formula (9) 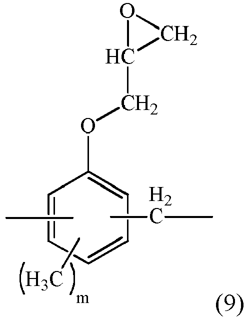 wherein m is 0 or 1. In a specific embodiment, the epoxy novolac resin preferably comprises an epoxy *o*-cresol novolac resin.

In some embodiments, epoxy-containing materials other than the epoxy novolac resin can be excluded from the composition. For example, in some embodiments, the composition can exclude epoxy-functionalized styrenic polymers such as epoxy-functionalized styrene acrylate oligomers.

The epoxy novolac resin, when present, can be included in the composition in an amount of 0.1 to 5 weight percent, based on the total weight of the composition. Within this range, the epoxy novolac resin can be present in an amount of 0.1 to 3 wt.%, or 0.25 to 2 wt.%, or 0.3 to 1.75 wt.%, or 0.5 to 1.5 wt.%.

In a specific embodiment, the compatibilized composition comprises 45 to 55 weight percent of the poly(etherimide sulfone); 25 to 35 weight percent of the poly(phthalamide); 15 to 25 weight percent of the poly(etherimide); and 0.5 to 1.5 weight percent of the epoxy cresol novolac resin; wherein weight percent of each component is based on the total weight of the composition. In another specific embodiment, the compatibilized composition comprises 10 to 30 weight percent of the poly(etherimide sulfone); 60 to 80 weight percent of the poly(phthalamide); 5 to 15 weight percent of the poly(etherimide); and 0.5 to 1.5 weight percent of the epoxy cresol novolac resin; wherein weight percent of each component is based on the total weight of the composition.

In some embodiments, the compatibilized composition can optionally further comprise one or more additives, with the proviso that any additive does not significantly adversely affect the desired properties of the compatibilized composition. Exemplary additives can include, for example, electrically conductive fillers, reinforcing fillers, stabilizers, lubricants, mold release agents, inorganic pigments, UV absorbers, antioxidants, plasticizers, anti-static agents, foaming agents, blowing agents, metal deactivators, and combinations comprising one or more of the foregoing. Examples of electrically conductive fillers include conductive carbon black, carbon fibers, metal fibers, metal powder, carbon nanotubes, and the like, and combinations comprising any one of the foregoing electrically conductive fillers. Examples of reinforcing fillers include glass beads (hollow and/or solid), glass flake, milled glass, glass fibers, talc, wollastonite, silica, mica, kaolin or montmorillonite clay, silica, quartz, barite, and the like, and combinations comprising any of the foregoing reinforcing fillers. Antioxidants can be compounds such as phosphites, phosphonites, and hindered phenols or mixtures thereof. Phosphorus containing stabilizers including triaryl phosphite and aryl phosphonates are of note as useful additives. Difunctional phosphorus containing compounds can also be employed. Stabilizers can have a molecular weight greater than or equal to 300. In some embodiments, phosphorus containing stabilizers with a molecular weight greater than or equal to 500 are useful. Phosphorus containing stabilizers are typically present in the composition at 0.05-0.5% by weight of the formulation. Flow aids and mold release compounds are also contemplated.

In some embodiments, the composition can exclude polymers other than the poly(phthalamide), the poly(etherimide sulfone), the poly(etherimide), and the epoxy novolac resin. For example, the composition can exclude one or more of poly(arylene sulfides), poly(arylene ethers), poly(amides) (other than the poly(phthalamide), poly(esters), and poly(ether sulfones).

The compatibilized composition disclosed herein can have one or more desirable properties. For example, the composition can have a tensile strength of greater than or equal to 76 MPa, as determined according to ASTM D638. The composition can have a notched Izod impact strength of greater than or equal to 48 Joules per meter, as determined according to ASTM D256. The composition can have a heat deflection temperature of greater than or equal to 100°C, as determined according to ASTM D648. In some embodiments, the composition comprises one of the foregoing properties. In some embodiments, the composition comprises two of the foregoing properties. In some embodiments, the composition comprises all of the foregoing properties.

The composition can be prepared by melt-blending or melt-kneading the components of the composition. The melt-blending or melt-kneading can be performed using common equipment such as ribbon blenders, HENSCHEL™ mixers, BANBURY™ mixers, drum tumblers, single-screw extruders, twin-screw extruders, multi-screw extruders, co-kneaders, and the like. For example, the present composition can be prepared by a) melt-mixing the poly(etherimide sulfone) and, when present, the poly(etherimide); and b) melt-mixing the poly(phthalamide) and, when present, the epoxy cresol novolac resin; wherein step a) and step b) are carried out sequentially or simultaneously. Preferably, steps a) and b) can be conducted at a temperature of 300 to 360°C. In some embodiments, step a) can be carried out at a temperature of 350 to 360°C and step b) can be carried out at a temperature of 330 to 340°C. In some embodiments, steps a) and b) are performed in a single pass in an extruder. In some embodiments, an initial mixture of step a) is formed in an initial pass in an extruder, and step b) is performed in a second pass through the extruder. The method of making the composition is further described in the working examples below.

The composition is also useful for forming a variety of articles. Suitable methods of forming such articles include single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used. The composition can be particularly useful for forming electronic components, for example, a composition of a consumer electronic device.

This disclosure is further illustrated by the following examples, which are nonlimiting.

### EXAMPLES

Materials used in the following Examples are described in Table 1.

**Table 1**

| **Material** | **Description** | **Source** |
|---|---|---|
| PEIS | Poly(etherimide sulfone) obtained as EXTEM XH 1005 | SABIC |
| PEI | Poly(etherimide) obtained as ULTEM 1010 | SABIC |
| PPA-1 | Poly(phthalamide) prepared from polymerization of hexamethylene diamine, 2-methylpentamethylene diamine, and terephthalic acid, obtained as ZYTEL HTN 501 | Dupont |
| PPA-2 | Poly(phthalamide) prepared from polymerization of hexamethylene diamine, adipic acid, isophthalic and terephthalic acid obtained as AMODEL A 1006 | Solvay |
| ESA | Epoxy-functional styrene-acrylate oligomer obtained as Joncryl ADR4368 | BASF |
| ECN | Epoxy cresol novolac resin (ECN) of poly(o-cresyl glycidyl ether)-co-formaldehyde, having a number average molecular weight of 873 grams/mole and an epoxy equivalent 5 units per chain | Aldrich |

Compositions were prepared according to the following procedure. Compositions were formed by melt mixing of PEIS and polyphthalamide (PPA). The compositions were compounded by extrusion in a 2.5-inch (6.4 cm) twin screw, vacuum vented extruder. Material blends evaluated are presented in the Tables below, with each constituent reported in weight percent based on the total weight of the composition. The extruder temperature was profiled and ranged from 300 to 350°C at the feed throat and die respectively. The blends were run at 250 rotations per minute (rpm) under vacuum.

Polymer blends were made using one of two compounding methods, 1) a single pass method as described above, 2) two pass method in which PEIS and PEI were melt mixed at 350 to 360°C to form an initial mixture and then subsequently melt mixed with PPA and epoxy (ECN or ESA) at 330 to 340°C. The single pass method was used unless otherwise noted.

Independent of the compounding method used, the extrudate was water cooled, chopped and pelletized. The polymer blend was dried at 150°C in preparation for injection molding of test samples. Polymer blends were injection molded into ASTM test samples using a barrel temperature setting of 340 to 350°C with mold temperature settings of 80 to 150°C and a 30-second cycle time.

Physical properties were measured using ASTM test methods. All molded samples were conditioned for at least 48 hours at 50% relative humidity prior to testing.

Notched Izod impact values were measured at room temperature on 3.2 millimeter thick bars as per ASTM D256. Bars were notched prior to oven aging and tested at room temperature. Results are reported in Joules per meter (J/m).

Tensile properties were measured on 3.2 millimeter type I bars as per ASTM method D638 at 23°C with a crosshead speed of 5 millimeters/minute. Tensile strength is reported at yield (Y) while percent elongation (%Elong) is reported at break (B). Tensile modulus, tensile strength at yield, and tensile strength at break results are reported in MPa.

Heat Deflection Temperature (HDT) was measured on a 3.2 millimeter injection molded bar at 1.82 MPa stress. HDT is reported in degree Celsius (°C).

### Examples 1-8

The purpose of Example 1-8 was to demonstrate the effect of changing the amounts and types of polymeric compatibilizers in compositions containing PEIS and PPA. Compositions were prepared and tested in accordance with the procedures described above. Compositions and properties for Examples 1-8 are shown in Table 2.

**Table 2**

| | 1* | 2 | 3* | 4* | 5* | 6 | 7* | 8* |
|---|---|---|---|---|---|---|---|---|
| PEIS | 30 | 29.5 | 29.5 | 15 | 70 | 69.5 | 69.5 | 55 |
| PPA-1 | 70 | 69.5 | 69.5 | 70 | 30 | 29.5 | 29.5 | 30 |
| PEI | | | | 15 | | | | 15 |
| ECN | | 1 | | | | 1 | | |
| ESA | | | 1 | | | | 1 | |
| Tensile strength (MPa) | 59 | 76 | 70 | 66 | 72 | 78 | 75 | 75 |
| Tensile modulus (MPa) | 3303 | 3272 | 3250 | 3197 | 3371 | 3212 | 3288 | 3215 |
| % Elongation | 2 | 3 | 3 | 3 | 3 | 5 | 3 | 4 |
| Flexural modulus (MPa) | 117 | 121 | 121 | 122 | 127 | 136 | 131 | 131 |
| Flexural strength (MPa) | 2777 | 2757 | 2745 | 2807 | 2615 | 2723 | 2576 | 2838 |
| HDT (1.82 MPa) | 101 | 103 | 103 | 94 | 180 | 183 | 180 | 162 |
| Notched Izod Impact (J/m) | 33 | 48 | 42 | 62 | 34 | 50 | 42 | 28 |

| | | | | | | | | |
|---|---|---|---|---|---|---|---|---|
| *Indicates Comparative Example | | | | | | | | |

These examples demonstrate that using a novolac cresol epoxy (ECN) resin yields a composition capable of achieving a combination of a tensile strength greater than or equal to 76 MPa, impact strength of greater than or equal to 48 J/m and heat deflection temperature greater than or equal to 103°C. This was found to be valid over a composition range of 30 to 70 wt% PEIS and 70 to 30 wt% PPA.

### Examples 9-16

The purpose of the Examples 9-16 was to demonstrate the effect of changing the amounts of PPA and PEIS in the compositions having a novolac cresol epoxy resin. Compositions were prepared and tested in accordance with the procedures described above. The compositions and properties are shown in Table 3.

**Table 3**

| | 9* | 10* | 11* | 12 | 13* | 14 | 15* | 16* |
|---|---|---|---|---|---|---|---|---|
| PEIS | 10 | 9.5 | 30 | 29.5 | 70 | 69.5 | 90 | 89.5 |
| PPA-1 | 90 | 89.5 | 70 | 69.5 | 30 | 29.5 | 10 | 9.5 |
| ECN | | 1 | | 1 | | 1 | | 1 |
| Tensile strength (MPa) | 54 | 52 | 59 | 76 | 72 | 78 | 66 | 72 |
| Tensile modulus (MPa) | 2933 | 3031 | 3303 | 3272 | 3371 | 3212 | 3205 | 3189 |
| % Elongation | 2 | 2 | 2 | 3 | 3 | 5 | 2 | 3 |
| Flexural strength (MPa) | 110 | 112 | 117 | 121 | 127 | 136 | 138 | 139 |
| Flexural modulus (MPa) | 2689 | 2756 | 2777 | 2757 | 2615 | 2723 | 2742 | 2701 |
| HDT (1.82 MPa) | 95 | 95 | 101 | 103 | 180 | 183 | 207 | 206 |
| Notched Izod Impact (J/m) | 48 | 52 | 33 | 48 | 34 | 50 | 21 | 22 |

| | | | | | | | | |
|---|---|---|---|---|---|---|---|---|
| *Indicates Comparative Example | | | | | | | | |

These examples demonstrate that only using a novolac cresol epoxy (ECN) resin in the specified amount yields a composition capable of achieving a combination of a tensile strength greater than or equal to 76 MPa, impact strength of greater than or equal to 48 J/m and heat deflection temperature greater than or equal to 103°C. This is valid over a composition range of 30 to 70 wt% PEIS and 70 to 30 wt% PPA.

### Examples 17-26

The purpose of these Examples was to demonstrate the effect of changing the amount of epoxy resin as well as the type of epoxy-containing component. Compositions were prepared and tested in accordance with the procedures described above. The compositions and test properties are shown in Table 4.

**Table 4**

| | 17* | 18* | 19* | 20* | 21 | 22* | 23* | 24* | 25* | 26 |
|---|---|---|---|---|---|---|---|---|---|---|
| PEI | 30 | 29.75 | 29.5 | 29.75 | 29.5 | 70 | 69.75 | 69.5 | 69.75 | 69.5 |
| PPA-1 | 70 | 69.75 | 69.5 | 69.75 | 69.5 | 30 | 29.75 | 29.5 | 29.75 | 29.5 |
| ECN | | | | 0.5 | 1 | | | | 0.5 | 1 |
| ESA | | 0.5 | 1 | | | | 0.5 | 1 | | |
| Tensile strength (MPa) | 59 | 61 | 70 | 63 | 76 | 72 | 75 | 75 | 79 | 78 |
| Tensile modulus (MPa) | 3303 | 3272 | 3250 | 3282 | 3272 | 3371 | 3311 | 3288 | 3124 | 3212 |
| % Elongation | 2 | 3 | 3 | 2 | 3 | 3 | 3 | 3 | 3 | 5 |
| Flexural strength (MPa) | 117 | 120 | 121 | 119 | 121 | 127 | 128 | 131 | 136 | 136 |
| Flexural modulus (MPa) | 2777 | 2766 | 2745 | 2768 | 2757 | 2615 | 2598 | 2576 | 2712 | 2723 |
| HDT (1.82 MPa) | 101 | 103 | 103 | 102 | 103 | 180 | 179 | 180 | 181 | 183 |
| Notched Izod Impact (J/m) | 33 | 40 | 42 | 40 | 48 | 34 | 38 | 42 | 45 | 50 |

| | | | | | | | | | | |
|---|---|---|---|---|---|---|---|---|---|---|
| *Indicates Comparative Example | | | | | | | | | | |

These examples demonstrate that using an ECN resin in the recited amount yields a composition capable of achieving a combination of a tensile strength greater than or equal to 76 MPa, impact strength of greater than or equal to 48 J/m and Heat deflection temperature greater than or equal to 103°C. This shows there is an optimum level of ECN epoxy resin for composition ranges of 30 to 70 wt% PEIS and 70 to 30 wt% PPA.

### Examples 27-34

The purpose of these Examples was to demonstrate the effect of changing the amount of novolac epoxy resin as well as the effect of alternative epoxy compounds. Compositions were prepared and tested in accordance with the procedures described above. The compositions and properties are shown in Table 5.

**Table 5**

| | 27* | 28* | 29 | 30* | 31* | 32* | 33 | 34* |
|---|---|---|---|---|---|---|---|---|
| PEIS | 30 | 29.75 | 29.5 | 29.25 | 70 | 69.75 | 69.5 | 69.25 |
| PPA-1 | 70 | 69.75 | 69.5 | 69.25 | 30 | 29.75 | 29.5 | 29.25 |
| ECN | | 0.5 | 1 | 1.5 | | 0.5 | 1 | 1.5 |
| Tensile strength (MPa) | 59 | 63 | 76 | 78 | 72 | 79 | 78 | 74 |
| Tensile modulus (MPa) | 3303 | 3282 | 3272 | 3190 | 3371 | 3124 | 3212 | 3100 |
| % Elongation | 2 | 2 | 3 | 3 | 3 | 3 | 5 | 4 |
| Flexural strength (MPa) | 117 | 119 | 121 | 120 | 127 | 136 | 136 | 127 |
| Flexural modulus (MPa) | 2777 | 2768 | 2757 | 2678 | 2615 | 2712 | 2723 | 2686 |
| HDT (1.82 MPa) | 101 | 102 | 103 | 99 | 180 | 181 | 183 | 175 |
| Notched Izod Impact (J/m) | 33 | 40 | 48 | 38 | 34 | 45 | 50 | 41 |

| | | | | | | | | |
|---|---|---|---|---|---|---|---|---|
| *Indicates Comparative Example | | | | | | | | |

These examples demonstrate using an ECN resin in the recited amount yields a composition capable of achieving a combination of a tensile strength greater than or equal to 76 MPa, impact strength of greater than or equal to 48 J/m, and heat deflection temperature greater than or equal to 103°C.This shows there is an optimum level of epoxy resin for composition ranges of 30 to 70 wt% PEI and 70 to 30 wt% PPA.

### Examples 35-42

The purpose of these Examples was to demonstrate the effect of changing the type of PPA resin as well as the effect of alternative epoxy-containing compounds. Compositions were prepared and tested in accordance with the procedures described above. The compositions and test properties are shown in Table 6.

**Table 6**

| | 35* | 36* | 37* | 38 | 39* | 40* | 41* | 42 |
|---|---|---|---|---|---|---|---|---|
| PEIS | 30 | 29.5 | 30 | 29.5 | 70 | 69.5 | 70 | 69.5 |
| PPA-1 | | | 70 | 69.5 | 30 | 29.5 | | |
| PPA-2 | 70 | 69.5 | | | | | 30 | 29.5 |
| ECN | | 1 | | 1 | | 1 | | 1 |
| Tensile strength (MPa) | 62 | 70 | 59 | 76 | 72 | 78 | 70 | 75 |
| Tensile modulus (MPa) | 3393 | 3505 | 3303 | 3272 | 3371 | 3212 | 3302 | 3254 |
| % Elongation | 2 | 3 | 2 | 3 | 3 | 5 | 3 | 2 |
| Flexural strength (MPa) | 115 | 112 | 117 | 121 | 127 | 136 | 122 | 128 |
| Flexural modulus (MPa) | 2657 | 2612 | 2777 | 2757 | 2615 | 2723 | 2689 | 2610 |
| HDT (1.82 MPa) | 98 | 100 | 101 | 103 | 180 | 183 | 178 | 176 |
| Notched Izod Impact (J/m) | 28 | 35 | 33 | 48 | 34 | 50 | 38 | 42 |

| | | | | | | | | |
|---|---|---|---|---|---|---|---|---|
| *Indicates Comparative Example | | | | | | | | |

These examples demonstrate using PPA-1 yields a composition capable of achieving a combination of a tensile strength greater than or equal to 76 MPa, impact strength of greater than or equal to 48 J/m, and heat deflection temperature greater than or equal to 103°C.

### Examples 43-50

The purpose of these Examples was to demonstrate the effect of changing amounts of PEIS. Compositions were made in accordance with the two pass method described above. For compositions not containing ECN, only the PPA was added to the initial mixture. The compositions were tested as described above and results are shown in Table 7.

**Table 7**

| | 43* | 44* | 45* | 46 | 47* | 48* | 49* | 50* |
|---|---|---|---|---|---|---|---|---|
| PEIS | 7 | 6.5 | 21 | 20.5 | 15 | 14.5 | 35 | 34.5 |
| PEI | 3 | 3 | 9 | 9 | 15 | 15 | 15 | 15 |
| PPA-1 | 90 | 89.5 | 70 | 69.5 | 70 | 69.5 | 50 | 49.5 |
| ECN | | 1 | | 1 | | 1 | | 1 |
| Tensile strength (MPa) | 59 | 75 | 70 | 82 | 66 | 74 | 63 | 73 |
| Tensile modulus (MPa) | 3342 | 3279 | 3251 | 3249 | 3197 | 3078 | 3274 | 3159 |
| % Elongation | 3 | 3 | 3 | 4 | 3 | 3 | 3 | 3 |
| Flexural strength (MPa) | 136 | 134 | 136 | 143 | 122 | 128 | 136 | 140 |
| Flexural modulus (MPa) | 2831 | 2768 | 2895 | 2942 | 2807 | 2780 | 2860 | 2760 |
| HDT (1.82 MPa) | 100 | 100 | 116 | 117 | 94 | 95 | 117 | 118 |
| Notched Izod Impact (J/m) | 43 | 48 | 50 | 60 | 62 | 66 | 52 | 58 |

| | | | | | | | | |
|---|---|---|---|---|---|---|---|---|
| *Indicates Comparative Example | | | | | | | | |

These results show with increasing amounts of PEI from 3 to 15 wt% and with 1 wt% ECN resin, the compositions still achieve the desired levels of tensile strength, impact strength, HDT, and % elongation performance.

A comparison of Examples 43-50 shows that in compositions comprising of PEIS, PPA, and PEI there is a marked increase in tensile strength, elongation at break, and impact strength in the presence of an epoxy resin. Comparative examples show this improvement is not seen in examples comprising a PEIS, PPA and PEI without the epoxy, and also that none of the compositions have a combination of a tensile strength greater than or equal to 76 MPa, impact strength of greater than or equal to 48 J/m, and heat deflection temperature greater than or equal to 103°C.

The results are further unexpected because (as evidenced by the impact strength results) the combination of a PPA, PEIS, and PEI (which are immiscible and incompatible) when used in conjunction with an ECN resin having an average of five epoxy groups per molecule, produce a composition that exhibits a ductility higher than the ductility of the PPA individually in PPA-rich compositions. For example, example 46 showed a significantly higher tensile strength and impact strength relative to other compositions tested. Thus, example 46 highlights the benefits of using PEI in combination with ECN in the present compositions.

### Examples 51-61

The purpose of these Examples was to demonstrate the effect of changing amounts PEI in PEIS-rich compositions. Compositions were made in accordance with the two-pass method described above. For compositions not containing ECN, only the PPA was added to the initial mixture. The compositions were tested as described above and results are shown in Table 8.

**Table 8**

| | 51* | 52* | 53* | 54* | 55* | 56 | 57* | 58 | 59 | 60* |
|---|---|---|---|---|---|---|---|---|---|---|
| PEIS | 63 | 62.5 | 56 | 55.5 | 49 | 48.5 | 35 | 34.5 | 63 | 62.5 |
| PEI | 7 | 7 | 14 | 14 | 21 | 21 | 35 | 35 | 27 | 27 |
| PPA-1 | 30 | 29.5 | 30 | 29.5 | 30 | 29.5 | 30 | 29.5 | 10 | 9.5 |
| ECN | | 1 | | 1 | | 1 | | 1 | | 1 |
| Tensile strength (MPa) | 56 | 63 | 76 | 84 | 88 | 90 | 72 | 84 | 81 | 90 |
| Tensile modulus (MPa) | 2994 | 2910 | 3217 | 3200 | 3264 | 3299 | 3232 | 3120 | 3169 | 3009 |
| % Elongation | 2 | 2 | 4 | 4 | 5 | 5 | 3 | 3 | 5 | 5 |
| Flexural strength (MPa) | 120 | 126 | 133 | 138 | 141 | 148 | 135 | 140 | 140 | 142 |
| Flexural modulus (MPa) | 2552 | 2467 | 2838 | 2756 | 2941 | 3042 | 2995 | 2867 | 2922 | 2890 |
| HDT (1.82 MPa) | 166 | 165 | 162 | 161 | 164 | 165 | 110 | 111 | 178 | 177 |
| Notched Izod Impact J/m | 20 | 22 | 29 | 33 | 42 | 51 | 44 | 48 | 33 | 38 |

| | | | | | | | | | | |
|---|---|---|---|---|---|---|---|---|---|---|
| *Indicates Comparative Example | | | | | | | | | | |

These results show that with increasing amounts of PEI, the compositions still achieve the desired levels of tensile strength, impact strength, and elongation.

Compositions made with the two-pass method showed a greater increase in tensile strength and impact strength than compositions made with the one-pass method.

Addition of epoxy shows good improvement in the tensile and impact strength compared to the control compositions. Two different types of multifunctional epoxies have been evaluated as a compatibilizer in PEIS/PPA composition. The amount of epoxy in the composition varied from 0.5 to 1.5 wt%, and 1% was found to be an optimum level to show enhancement in the tensile and impact properties. In addition, the blends showed better heat performance compared to PPA resin.

It has been found that addition of PEI as third component with or without epoxy to PEIS/PPA blends leads to an improvement in impact and tensile strength properties of the blend in comparison with neat PPA blends. Without being bound by theory, it is believed that PEI can act as a compatibilizing agent for PEIS/PPA blends, especially in PEIS-rich blends. It is expected that other poly(etherimides) would also be good compatibilizers for the PEIS/PPA blends, in particular poly(etherimide)-siloxane copolymers and fluorine-containing poly(etherimide).

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A compatibilized composition comprising
10 to 90 weight percent of a poly(etherimide sulfone);
10 to 90 weight percent of a poly(phthalamide); and
at least one of a poly(etherimide) and an epoxy novolac resin, wherein the poly(etherimide) and the epoxy are present in an amount effective to act as a compatibilizer for the poly(etherimide sulfone) and the poly(phthalamide);
wherein weight percent of each component is based on the total weight of the composition.

2. The compatibilized composition of claim 1, wherein the compatibilizer comprises the epoxy novolac resin.

3. The compatibilized composition of claim 1, wherein the compatibilizer comprises the poly(etherimide).

4. The compatibilized composition of claim 1, wherein the compatibilizer comprises the poly(etherimide) and the epoxy novolac resin.

5. The compatibilized composition of any one of claims 1 to 4, wherein the composition exhibits one or more of:
a tensile strength of greater than or equal to 76 MPa, as determined according to ASTM D638;
a notched Izod impact strength of greater than or equal to 48 Joules per meter, as determined according to ASTM D256; and
a heat deflection temperature of greater than or equal to 100°C, as determined according to ASTM D648.

6. The compatibilized composition of any one or more of claims 1 to 5, wherein the polyetherimide is present in an amount of less than or equal to 35 weight percent and the epoxy novolac resin is present in an amount of 0.5 to 1.5 weight percent.

7. The compatibilized composition of any one or more of claims 1 to 6, wherein the polyetherimide sulfone is present in an amount of 20 to 80 weight percent, preferably 20 to 70 weight percent, more preferably 30 to 60 weight percent, even more preferably 40 to 60 weight percent.

8. The compatibilized composition of any one or more of claims 1 to 7, wherein the polyphthalamide is present in an amount of 20 to 80 weight percent, preferably 40 to 80 weight percent, more preferably 55 to 75 weight percent.

9. The compatibilized composition of any one or more of claims 1 to 8, wherein the polyphthalamide comprises reactive amine end groups, reactive acid end groups, or a combination thereof.

10. The compatibilized composition of any one or more of claims 1 to 9, wherein the epoxy novolac resin comprises an epoxy phenol novolac resin, an epoxy cresol novolac resin, or a combination comprising at least one of the foregoing.

11. The compatibilized composition of claim 1, comprising
45 to 55 weight percent of the poly(etherimide sulfone);
25 to 35 weight percent of the poly(phthalamide);
15 to 25 weight percent of the poly(etherimide); and
0.5 to 1.5 weight percent of the epoxy cresol novolac resin;
wherein weight percent of each component is based on the total weight of the composition.

12. The compatibilized composition of claim 1, comprising
10 to 30 weight percent of the poly(etherimide sulfone);
60 to 80 weight percent of the poly(phthalamide);
5 to 15 weight percent of the poly(etherimide); and
0.5 to 1.5 weight percent of the epoxy cresol novolac resin;
wherein weight percent of each component is based on the total weight of the composition.

13. An article comprising the compatibilized composition of any one or more of claims 1 to 12, preferably wherein the article in a molded article.

14. A method of making the compatibilized composition of any one or more of claims 1 to 12, the method comprising:
a) melt-mixing the poly(etherimide sulfone) and, when present, the poly(etherimide);
b) melt-mixing the poly(phthalamide) and, when present, the epoxy novolac resin;
wherein step a) and step b) are carried out sequentially or simultaneously;
preferably wherein steps a) and b) are at a temperature of 300 to 360°C, more preferably wherein step a) is at a temperature of 350 to 360°C and step b) is at a temperature of 330 to 340°C.

15. The method of claim 13, wherein
steps a) and b) are performed in a single pass in an extruder; or
an initial mixture of step a) is formed in an initial pass in an extruder, and step b) is performed in a second pass through the extruder.

## Patentansprüche

1. Kompatibilisierte Zusammensetzung enthaltend:
10 bis 90 Gewichtsprozent eines Polyetherimidsulfons,
10 bis 90 Gewichtsprozent eines Polyphthalamids und
wenigstens eines von einem Polyetherimid und einem Epoxid-Novolak-Harz, wobei das Polyetherimid und das Epoxid in einer zur Wirkung als ein Kompatibilisierungsmittel für das Polyetherimidsulfon und das Polyphthalamid wirksamen Menge vorliegen,
wobei die Gewichtsprozente von jeder Komponente auf das Gesamtgewicht der Zusammensetzung bezogen sind.

2. Kompatibilisierte Zusammensetzung nach Anspruch 1, wobei das Kompatibilisierungsmittel das Epoxid-Novolak-Harz enthält.

3. Kompatibilisierte Zusammensetzung nach Anspruch 1, wobei das Kompatibilisierungsmittel das Polyetherimid enthält.

4. Kompatibilisierte Zusammensetzung nach Anspruch 1, wobei das Kompatibilisierungsmittel das Polyetherimid und das Epoxid-Novolak-Harz enthält.

5. Kompatibilisierte Zusammensetzung nach einem der Ansprüche 1 bis 4, wobei die Zusammensetzung eines oder mehrere aufweist von:
einer gemäß der ASTM D638 bestimmten Zugfestigkeit von mehr als oder gleich 76 MPa,
einer gemäß der ASTM D256 bestimmten Kerbschlagfestigkeit von mehr als oder gleich 48 Joule pro Meter und
einer gemäß der ASTM D648 bestimmten Wärmeformbeständigkeitstemperatur von größer als oder gleich 100°C.

6. Kompatibilisierte Zusammensetzung nach einem oder mehreren der Ansprüche 1 bis 5, wobei das Polyetherimid in einer Menge von weniger als oder gleich 35 Gewichtsprozent vorliegt und das Epoxid-Novolak-Harz in einer Menge von 0,5 bis 1,5 Gewichtsprozent vorliegt.

7. Kompatibilisierte Zusammensetzung nach einem oder mehreren der Ansprüche 1 bis 6, wobei das Polyetherimidsulfon in einer Menge von 20 bis 80 Gewichtsprozent, vorzugsweise 20 bis 70 Gewichtsprozent, besonders bevorzugt 30 bis 60 Gewichtsprozent, noch weiter bevorzugt 40 bis 60 Gewichtsprozent vorliegt.

8. Kompatibilisierte Zusammensetzung nach einem oder mehreren der Ansprüche 1 bis 7, wobei das Polyphthalamid in einer Menge von 20 bis 80 Gewichtsprozent, vorzugsweise 40 bis 80 Gewichtsprozent, besonders bevorzugt 55 bis 75 Gewichtsprozent vorliegt.

9. Kompatibilisierte Zusammensetzung nach einem oder mehreren der Ansprüche 1 bis 8, wobei das Polyphthalamid reaktive Aminendgruppen, reaktive Säureendgruppen oder eine Mischung hiervon aufweist.

10. Kompatibilisierte Zusammensetzung nach einem oder mehreren der Ansprüche 1 bis 9, wobei das Epoxid-Novolak-Harz ein Epoxid-Phenolnovolak-Harz, ein Epoxid-Kresolnovolak-Harz oder eine Mischung enthaltend wenigstens eines der vorstehenden enthält.

11. Kompatibilisierte Zusammensetzung nach Anspruch 1 enthaltend:
45 bis 55 Gewichtsprozent des Polyetherimidsulfons,
25 bis 35 Gewichtsprozent des Polyphthalamids,
15 bis 25 Gewichtsprozent des Polyetherimids und
0,5 bis 1,5 Gewichtsprozent des Epoxid-Kresolnovolak-Harzes,
wobei die Gewichtsprozente jeder Komponente auf das Gesamtgewicht der Zusammensetzung bezogen sind.

12. Kompatibilisierte Zusammensetzung nach Anspruch 1 enthaltend:
10 bis 30 Gewichtsprozent des Polyetherimidsulfons,
60 bis 80 Gewichtsprozent des Polyphthalamids,
5 bis 15 Gewichtsprozent des Polyetherimids und
0,5 bis 1,5 Gewichtsprozent des Epoxid-Kresolnovolak-Harzes,
wobei die Gewichtsprozente jeder Komponente auf das Gesamtgewicht der Zusammensetzung bezogen sind.

13. Gegenstand enthaltend eine kompatibilisierte Zusammensetzung nach einem oder mehreren der Ansprüche 1 bis 12, wobei der Gegenstand vorzugsweise ein Formteil ist.

14. Verfahren zum Herstellen einer kompatibilisierten Zusammensetzung nach einem oder mehreren der Ansprüche 1 bis 12, wobei das Verfahren umfasst:
a) Schmelzmischen des Polyetherimidsulfons und, falls vorliegend, des Polyetherimids,
b) Schmelzmischen des Polyphthalamids und, falls vorliegend, des Epoxid-Novolak-Harzes,
wobei der Schritt a) und b) nacheinander oder gleichzeitig durchgeführt werden,
wobei vorzugsweise die Schritte a) und b) bei einer Temperatur von 300 bis 360°C durchgeführt werden, wobei besonders bevorzugt der Schritt a) bei einer Temperatur von 350°C bis 360°C durchgeführt wird und der Schritt b) bei einer Temperatur von 330°C bis 340°C durchgeführt wird.

15. Verfahren nach Anspruch 13, wobei:
die Schritte a) und b) in a einem Durchgang in einem Extruder durchgeführt werden oder
eine anfängliche Mischung des Schritts a) in einem ersten Durchgang in einem Extruder gebildet wird und der Schritt b) in einem zweiten Durchgang durch den Extruder durchgeführt wird.

## Revendications

1. Composition compatibilisée comprenant
10 à 90 pour cent en poids d'une poly(étherimide sulfone) ;
10 à 90 pour cent en poids d'un polyphtalamide ; et
au moins l'un parmi un polyétherimide et une résine époxy-novolaque, dans laquelle le polyétherimide et l'époxy sont présents dans une quantité efficace pour agir en tant qu'agent de compatibilité pour la poly(étherimide sulfone) et le polyphtalamide ;
dans laquelle le pourcentage en poids de chaque composant est basé sur le poids total de la composition.

2. Composition compatibilisée selon la revendication 1, dans laquelle l'agent de compatibilité comprend la résine époxy-novolaque.

3. Composition compatibilisée selon la revendication 1, dans laquelle l'agent de compatibilité comprend le polyétherimide.

4. Composition compatibilisée selon la revendication 1, dans laquelle l'agent de compatibilité comprend le polyétherimide et la résine époxy-novolaque.

5. Composition compatibilisée selon l'une quelconque des revendications 1 à 4, dans laquelle la composition présente une ou plusieurs parmi :
une résistance à la traction supérieure ou égale à 76 MPa, telle que déterminée selon la norme ASTM D638 ;
une résistance au choc Izod entaillé supérieure ou égale à 48 Joules par mètre, telle que déterminée selon la norme ASTM D256 ; et
une température de déformation à chaud supérieure ou égale à 100 °C, telle que déterminée selon la norme ASTM D648.

6. Composition compatibilisée selon l'une quelconque ou plusieurs des revendications 1 à 5, dans laquelle le polyétherimide est présent dans une quantité inférieure ou égale à 35 pour cent en poids et la résine époxy-novolaque est présente dans une quantité de 0,5 à 1,5 pour cent en poids.

7. Composition compatibilisée selon l'une quelconque ou plusieurs des revendications 1 à 6, dans laquelle la poly(étherimide sulfone) est présente dans une quantité de 20 à 80 pour cent en poids, préférentiellement de 20 à 70 pour cent en poids, plus préférentiellement de 30 à 60 pour cent en poids, plus préférentiellement encore de 40 à 60 pour cent en poids.

8. Composition compatibilisée selon l'une quelconque ou plusieurs des revendications 1 à 7, dans laquelle le polyphtalamide est présent dans une quantité de 20 à 80 pour cent en poids, préférentiellement de 40 à 80 pour cent en poids, plus préférentiellement de 55 à 75 pour cent en poids.

9. Composition compatibilisée selon l'une quelconque ou plusieurs des revendications 1 à 8, dans laquelle le polyphtalamide comprend des groupes terminaux aminé réactifs, des groupes terminaux acide réactifs, ou une combinaison de ceux-ci.

10. Composition compatibilisée selon l'une quelconque ou plusieurs des revendications 1 à 9, dans laquelle la résine époxy-novolaque comprend une résine époxy-phénol-novolaque, une résine époxy-crésol-novolaque, ou une combinaison comprenant au moins l'une des résines précitées.

11. Composition compatibilisée selon la revendication 1, comprenant
45 à 55 pour cent en poids de la poly(étherimide sulfone) ;
25 à 35 pour cent en poids du polyphtalamide ;
15 à 25 pour cent en poids du polyétherimide ; et
0,5 à 1,5 pour cent en poids de la résine époxy-crésol-novolaque ;
dans laquelle le pourcentage en poids de chaque composant est basé sur le poids total de la composition.

12. Composition compatibilisée selon la revendication 1, comprenant
10 à 30 pour cent en poids de la poly(étherimide sulfone) ;
60 à 80 pour cent en poids du polyphtalamide ;
5 à 15 pour cent en poids du polyétherimide ; et
0,5 à 1,5 pour cent en poids de la résine époxy-crésol-novolaque ;
dans laquelle le pourcentage en poids de chaque composant est basé sur le poids total de la composition.

13. Article comprenant la composition compatibilisée selon l'une quelconque ou plusieurs des revendications 1 à 12, de préférence dans lequel l'article est un article moulé.

14. Procédé de fabrication de la composition compatibilisée selon l'une quelconque ou plusieurs des revendications 1 à 12, le procédé comprenant :
a) le mélange à l'état fondu de la poly(étherimide sulfone) et, lorsqu'il est présent, du polyétherimide ;
b) le mélange à l'état fondu du polyphtalamide et, lorsqu'elle est présente, de la résine époxy-novolaque ;
dans lequel l'étape a) et l'étape b) sont réalisées séquentiellement ou simultanément ;
de préférence dans lequel les étapes a) et b) sont à une température de 300 à 360 °C, plus préférentiellement dans lequel l'étape a) est à une température de 350 à 360 °C et l'étape b) est à une température de 330 à 340 °C.

15. Procédé selon la revendication 13, dans lequel
les étapes a) et b) sont exécutées en un seul passage dans une extrudeuse ; ou
un mélange initial de l'étape a) est formé lors d'un passage initial dans une extrudeuse, et l'étape b) est réalisée lors d'un deuxième passage à travers l'extrudeuse.
